# EUROPEAN PATENT SPECIFICATION

(11) **EP 2 412 967 B1**
(45) Date of publication and mention of the grant of the patent: **19.12.2018**
(21) Application number: 10756120.1
(22) Date of filing: 24.03.2010
(51) Int. Cl.: F02M 55/02, F16L 19/028, F02M 55/00

(54) **HIGH-PRESSURE FUEL INJECTION TUBE HAVING CONNECTION HEAD AND METHOD FOR PRODUCING THE SAME**
HOCHDRUCKEINSPRITZROHR MIT ANSCHLUSSKOPF UND HERSTELLUNGSVERFAHREN DAFÜR
TUBULURE D'INJECTION DE CARBURANT À HAUTE PRESSION AVEC TÊTE DE RACCORDEMENT ET PROCÉDÉ POUR SA PRODUCTION

(30) Priority: 24.03.2009 JP 2009072792
(43) Date of publication of application: 01.02.2012
(73) Proprietor: Usui Kokusai Sangyo Kaisha Limited, Shizuoka 411-8610 (JP)
(72) Inventor: WATANABE Eiji, Sunto-gun Shizuoka 411-8610 (JP)
(74) Representative: Ipside
(86) International application number: PCT/JP2010/055101
(87) International publication number: WO 2010/110324

(56) References cited:
- EP-A1- 1 995 445
- WO-A1-03/081021
- DD-A1- 225 480
- DE-A1- 19 523 287
- DE-A1-102005 047 275
- FR-A1- 2 664 021
- JP-A- 2003 336 560
- JP-A- 2008 133 817
- US-A1- 2003 230 349
- US-A1- 2006 042 710

## Description

### Technical Field

The present invention relates to a structure of a connection head portion for a high-pressure fuel injection pipe comprising a thick-walled steel pipe having a relatively small diameter, which is arranged and frequently used, for example, for a supply passage of fuel in a diesel internal combustion engine or the like, preferably, for a common rail and an injector of a diesel engine equipped with an accumulator-type fuel injection system.

### Background Art

Conventionally, it is known as a high-pressure fuel injection pipe having such a connection head portion that one has a connection head portion 112 formed of a spherical seat face 113, an annular flange portion 115 provided so as to be spaced from the seat face 113 in an axial direction of the pipe, and an arc face 114 continuing into the seat face 113 and tapered up to the annular flange portion 115 toward a distal end in a connection end portion of a thick-walled steel pipe 111 having a relatively small diameter, as illustrated in FIG. 19 (see FIG. 4 in Patent Literature 1) . In relation to forming by a buckling working utilizing a pressure applied in an axial direction of the pipe externally by a punch member, the connection head portion 112 is configured such that a pocket (an annular recessed portion) 116 where tensile stress of an inner surface has been raised by diameter enlargement of an inner diameter and stress concentration due to outward expansion of a peripheral wall associated with the buckling work utilizing the pressing is caused on an inner circumferential face of the head portion. In this state, the high-pressure fuel injection pipe is provided for use, but there are such problems that cavitation erosion occurs near the pocket due to high-pressure fluid during arrangement and use, a crack extending in a diametrical direction due to fatigue failure occurs radially on the connection head portion from a wrinkle near the pocket, or a crack extending in a circumferential direction due to the fatigue failure occurs around the pocket.

As a solution to these problems, the present applicant has previously proposed a method for, in a high-pressure fuel injection pipe having, at a connection end portion of a thick-walled steel pipe having a relatively small diameter, a connection head portion formed of a spherical seat face, an annular flange portion provided so as to be spaced from the seat face in an axial direction of the pipe, and a conical face continuing into the seat face and tapered up to the annular flange portion toward a distal end, providing a shallow annular curved recessed groove at a portion of the conical face, thereby making the depth of a pocket occurring inside the head portion according to formation of the connection head portion to becoming shallow and gentle (see FIG. 1 in Patent Literature 1) ; and a method for performing a head portion working causing an outer peripheral face to coincide with a truncated conical or truncated arcuate seat face for a mating seat portion to form a connection head portion having a shallow and gentle annular recessed groove inside so that a connection washer fitted on an outer peripheral face of a part below a neck of the connection head portion covers the connection head portion (Patent Literature 2), and the like.

### Citation List

### Patent Literature

Patent Literature 1: JP-2003-336560(A)
Patent Literature 2: JP-2002-54770(A)

### Summary of the Invention

### Problem to be solved by the Invention

An object of the present invention is to propose a high-pressure fuel injection pipe having a connection head portion which can obtain an effect approximately equal to or more than the previously proposed techniques as mentioned above, as means for preventing a crack generation from a wrinkle portion near the pocket associated with formation of the pocket during formation of the head portion, generation of a crack due to cavitation erosion occurred near the pocket due to flow of high-pressure fluid during arrangement and use of the high-pressure fuel injection pipe, and generation of a rising phenomenon of tensile stress on an inner surface due to enlargement of an inner diameter and stress concentration associated with formation of the pocket during the formation of the head portion, and a manufacturing method of the same.

### Means for solving the Problem

A high-pressure fuel injection pipe having a connection head portion according to the present invention is a high-pressure fuel injection pipe which has, in a connection end portion of a thick-walled steel pipe having a relatively small diameter, a connection head portion comprising a truncated conical or truncated arcuate seat face, an annular flange portion formed to be spaced from the seat face in an axial direction of the pipe, and a cylindrical face continuing into the seat face and formed between the seat face and a fillet portion of the annular flange portion, wherein the connection head portion is configured such that a cylindrical face has contours, in a section along the axial direction of the pipe from an end portion of the fillet portion of the annular flange portion toward the seat face, formed such that a rear side opening angle θ in the section along the axial direction of the pipe satisfies 0° < θ ≤ 20° and furthermore, when the length of the cylindrical face in the axial direction of the pipe is represented by h and the length of the pipe in the axial direction of the pipe from a terminal of the connection head portion to an end portion of the fillet portion on the side of the annular flange portion of the cylindrical face is represented by H, a ratio of the h and H satisfies 0.33 ≤ h/H ≤ 0.85. Here, it is preferred that the seat face has a spherical shape. Further, the contours of the cylindrical face in a section along the axial direction of the pipe are limited to a straight-line shape.

Furthermore, a manufacturing method of a high-pressure fuel injection pipe having a connection head portion according to the present invention is a manufacturing method of a high-pressure fuel injection pipe having a connection head portion comprising a truncated conical or truncated arcuate seat face, an annular flange portion formed to be spaced from the seat face in an axial direction of the pipe, and a cylindrical face continuing into the seat face and formed between the seat face and a fillet portion of the annular flange portion, the connection head portion being buckled and formed by pressing an end portion of a thick-walled steel pipe having a relatively small diameter in the axial direction of the pipe externally by using a punch member, wherein a punch member having an inner-diametrical portion which has contours, in a section along the axial direction of the pipe from an end portion of the fillet portion of the annular flange portion toward the seat face, formed such that a rear side opening angle θ in the section along the axial direction of the pipe satisfies 0° < θ ≤ 20° and furthermore, when the length of the inner-diametrical portion in the axial direction of the pipe is represented by h and the length in the axial direction of the pipe from a terminal of the connection head portion to an end portion of the fillet portion on the side of the annular flange portion of the inner diametrical portion is represented by H, a ratio of the h and H satisfies 0.33 ≤ h/H ≤ 0.85 is used. It is preferred that the seat face has a spherical shape. The contours of the cylindrical face in a section along the axial direction of the pipe are of a straight line shape.

### Effect of the Invention

Since the high-pressure fuel injection pipe having a connection head portion according to the present invention is configured such that a cylindrical face has contours, in a section along the axial direction of the pipe from an end portion of the fillet portion of the annular flange portion on the side of an injection port of the pipe toward the seat face, formed such that a rear side opening angle θ in the section along the axial direction of the pipe satisfies 0° < θ ≤ 20° where when the length of the cylindrical face in the axial direction of the pipe is represented by h and the length in the axial direction of the pipe from a terminal of the connection head portion to an end portion of the cylindrical portion on the side of the annular flange portion is represented by H, the ratio of the h and H satisfies 0.33 ≤ h/H ≤ 0.85, supersizing of the pocket (annular recessed portion) occurred inside the connection head portion during formation of the connection head portion by plastic working is suppressed so that an inner peripheral face of the connection head portion is made approximately cylindrical, and occurrence of a formation wrinkle on a surface thereof can be suppressed. This can eliminate risks of generation of a crack in a valley portion of the pocket portion during the formation of the connection head portion and generation of a crack caused by cavitation erosion due to fluid pressure within the connection head portion, as well as enlargement of the inner diameter and a rising phenomenon of tensile stress of an inner surface due to stress concentration associated with formation of the pocket during the formation of the connection head portion, and furthermore can largely reduce a possibility that the inner peripheral face of the connection head portion acts as a starting point of fatigue failure.

Further, according to the manufacturing method of a high-pressure fuel injection pipe according to the present invention, by using a punch member having an inner-diametrical portion which has contours, in a section along the axial direction of the pipe from an end portion of a fillet portion of the annular flange portion toward the seat face, formed such that a rear side opening angle θ in the section along the axial direction of the pipe satisfies 0° < θ ≤ 20° where a ratio of the length h of the inner-diametrical portion in the axial direction of the pipe and the length H in the axial direction of the pipe from a terminal of the connection head portion to an end portion of the fillet portion on the side of the annular flange portion of the inner-diametrical portion satisfies 0.33 ≤ h/H ≤ 0.85, it can be reduced that, during formation, movement of a material of the inner peripheral portion of the pipe forced to be fluidized according to movement of a material of the pipe on the side of an outer face of the pipe flowed approximately vertically along a wall face of the inner-diametrical portion of the punch is made larger according to increase of the axial length of the inner-diametrical portion of the punch so that expansions of a volume of the pocket portion and formation strain which is a factor causing a wrinkle in the pocket portion.

### Brief Description of the Drawings

FIG. 1 is a vertical sectional side view showing a first embodiment of a high-pressure fuel injection pipe according to the present invention;
FIG. 2 is a vertical sectional side view showing a second embodiment of the high-pressure fuel injection pipe according to the present invention;
FIG. 3 is a vertical sectional side view showing a third embodiment of the high-pressure fuel injection pipe according to the present invention;
FIG. 4 is a vertical sectional side view showing a fourth embodiment of the high-pressure fuel injection pipe according to the present invention;
FIG. 5 is a vertical sectional side view showing a fifth embodiment of the high-pressure fuel injection pipe according to the present invention;
FIG. 6 is a half vertical sectional side view of a truncated arcuate seat face showing a sixth embodiment of the high-pressure fuel injection pipe according to the present invention;
FIG. 7 is an enlarged vertical sectional side view showing one embodiment of a punch member used for manufacturing a high-pressure fuel injection pipe according to the present invention;
FIG. 8 is a working step diagram showing a first embodiment of a manufacturing method of a high-pressure fuel injection pipe using the punch member shown in FIG. 7;
FIG. 9 is a working step diagram showing a second embodiment of a manufacturing method of a high-pressure fuel injection pipe using the punch member shown in FIG. 7;
FIGS. 10A and 10B are partial sectional views of a connection head portion in a manufacturing method of a high-pressure fuel injection pipe using a punch member having substantially the same sectional structure as the punch member shown in FIG. 7, FIG. 10A being a partial sectional view showing a state of the connection head portion during formation thereof and FIG. 10B being a partial sectional view showing a state of the connection head portion at a completion time of the formation;
FIG. 11 is a schematic diagram showing a high-pressure fuel injection pipe corresponding to Example 1 of the present invention;
FIG. 12 is a schematic diagram showing a high-pressure fuel injection pipe corresponding to Example 2 of the present invention;
FIG. 13 is a schematic diagram showing a high-pressure fuel injection pipe corresponding to Example 4 of the present invention;
FIG. 14 is a schematic diagram showing a high-pressure fuel injection pipe corresponding to Example 5 of the present invention;
FIG. 15 is a schematic diagram showing a high-pressure fuel injection pipe corresponding to Example 8 of the present invention;
FIG. 16 is a schematic diagram showing a high-pressure fuel injection pipe corresponding to Example 9 of the present invention;
FIG. 17 is a graph showing relationships between a rear side opening angle θ and strain of a pocket portion in Examples 1 to 4 of the present invention and Comparative Examples 1 to 3;
FIG. 18 is a graph showing relationships between h/H and of a pocket portion strain in Examples 5 to 9 of the present invention and Comparative Examples 4 and 5; and

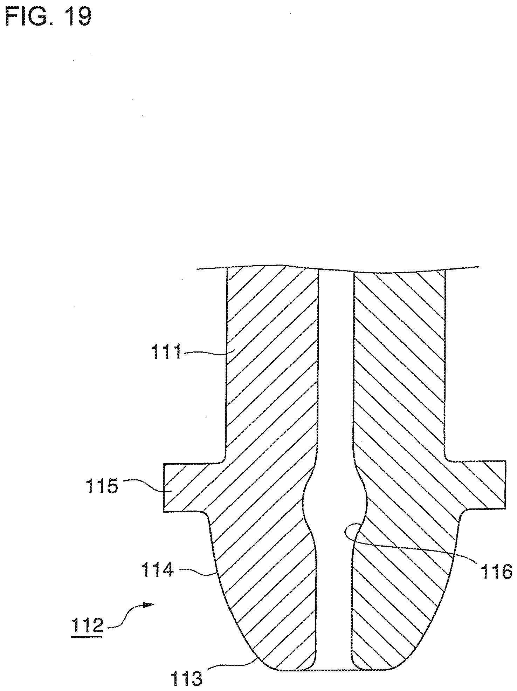

FIG. 19 is a vertical sectional side view showing one example of a connection head portion of a conventional high-pressure fuel injection pipe to be handled in the present invention.

### Best Mode for carrying out the Invention

In a high-pressure fuel injection pipe having a connection head portion according to the present invention, the reason why a contour of a cylindrical face from an end portion of a fillet portion of an annular flange portion on the side of an injection port of the pipe toward a seat face is formed such that a rear side opening angle θ in a section along the axial direction of the pipe satisfies 0° < θ ≤ 20° is because it aims to reduce expansions of a volume of a pocket portion and formation strain caused by movement of a pipe material flowing along a wall face approximately vertically affecting a material of the inner peripheral portion of the pipe during formation of the connection head portion. In addition, the reason why the rear side opening angle θ in the section along the axial direction of the pipe is set to 20° or less is because when the rear side opening angle θ exceeds 20°, the volume of the pocket portion and the formation strain which is a factor causing a wrinkle in the pocket portion become to expand, while when the rear side opening angle θ is equal to 0° or less, the contours of the connection head portion extending toward the seat face in a section along the axial direction of the pipe becomes wider forward, so that expansions of the volume of the pocket portion and the formation strain which is a factor causing a wrinkle in the pocket portion cannot be reduced. Incidentally, the rear side opening angle θ preferably, but not according to the invention, satisfies 0° < θ ≤ 15°.

Moreover, the reason why the ratio of the length h of the cylindrical face in the axial direction of the pipe and the length H in the axial direction of the pipe from a terminal of the connection head portion to an end portion of the fillet portion on the side of the annular flange portion of the cylindrical face is set to satisfy 0.33 ≤ h/H ≤ 0.85 is because when the h/H is less than 0.33, expansions of the volume of the pocket portion and the formation strain which is a factor causing a wrinkle in the pocket portion cannot be reduced, while when the h/H exceeds 0.85, the seal face cannot be secured.

Further, in a manufacturing method of a high-pressure fuel injection pipe having a connection head portion according to the present invention, the reason why the contours of an inner-diametrical portion of the punch member in a section along the axial direction of the pipe from the end portion of the fillet portion of the annular flange portion of the connection head portion on the side of an injection port of the pipe toward the seat face is formed in an cylindrical face where the rear side opening angle θ satisfies 0° ≤ θ ≤ 20° like the above is because it aims to reduce expansions of the volume of the pocket portion and formation strain which is a factor causing a wrinkle in the pocket portion caused by movement of a pipe material flowing along a wall face approximately vertically affecting a material of the inner peripheral portion of the pipe during formation of the connection head portion. In addition, the reason why the rear side opening angel θ of the cylindrical face in the section along the axial direction of the pipe is set to 20° or less is because when the rear side opening angle θ exceeds 20° like the above, the volume of a pocket portion and the formation strain which is a factor causing a wrinkle in the pocket portion become to expand, while when the rear side opening angle θ is less than 0°, the contours in the section along the axial direction of the pipe toward the seat face of the connection head portion becomes wider forward, so that expansions of the volume of the pocket portion and the formation strain which is a factor causing a wrinkle in the pocket portion cannot be reduced. In the method of the present invention, the rear side opening angle θ preferably, but not according to the invention, also satisfies 0° < θ ≤ 15°.

Furthermore, the reason why the ratio of the length h of the cylindrical face in the axial direction of the pipe and the length H in the axial direction of the pipe from a terminal of the connection head portion to an end portion of the fillet portion on the side of the annular flange portion of the inner-diametrical portion is set to satisfy 0.33 ≤ h/H ≤ 0.85 is because when the h/H is less than 0.33, expansions of the volume of the pocket portion and the formation strain which is a factor causing a wrinkle in the pocket portion cannot be reduced, while when the h/H exceeds 0.85, the seal face cannot be secured, like the above.

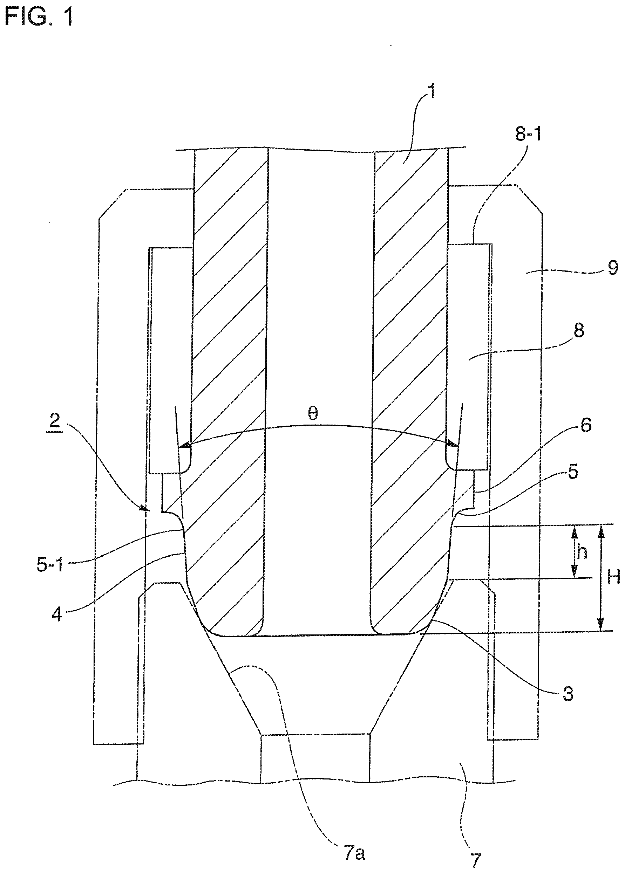

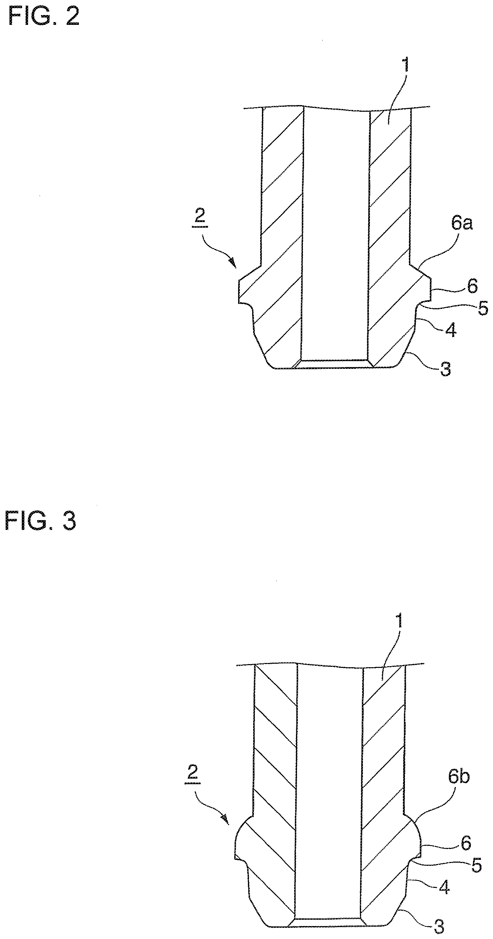

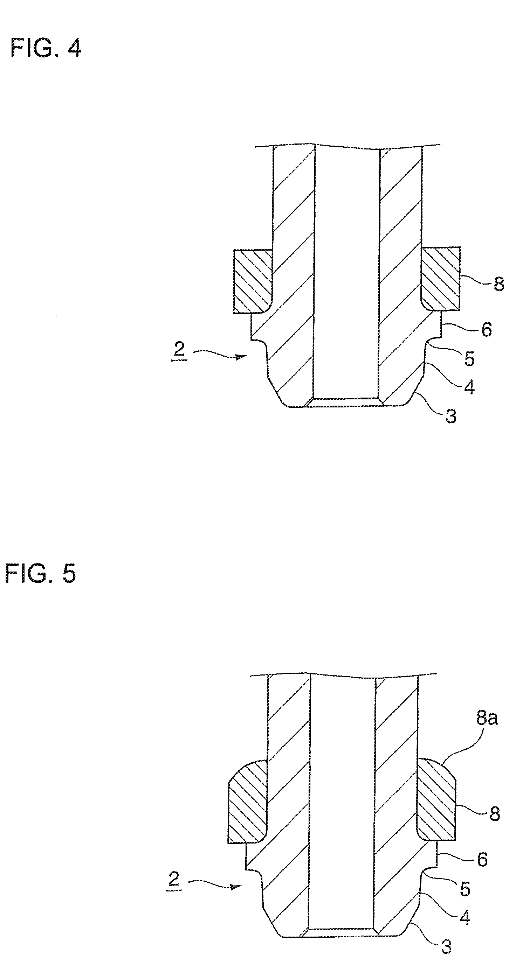

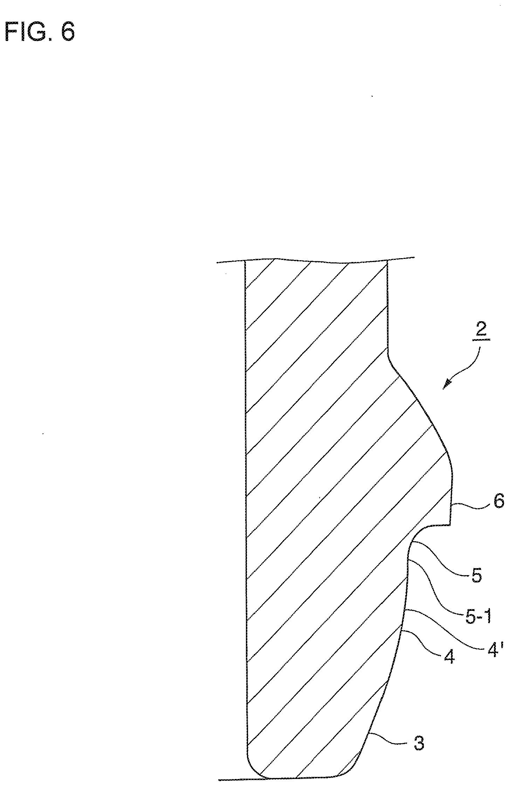

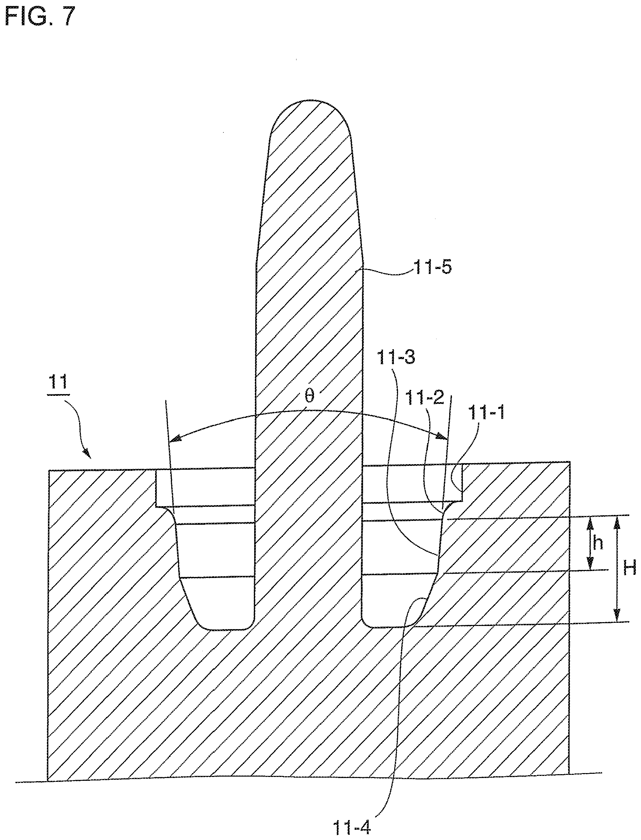

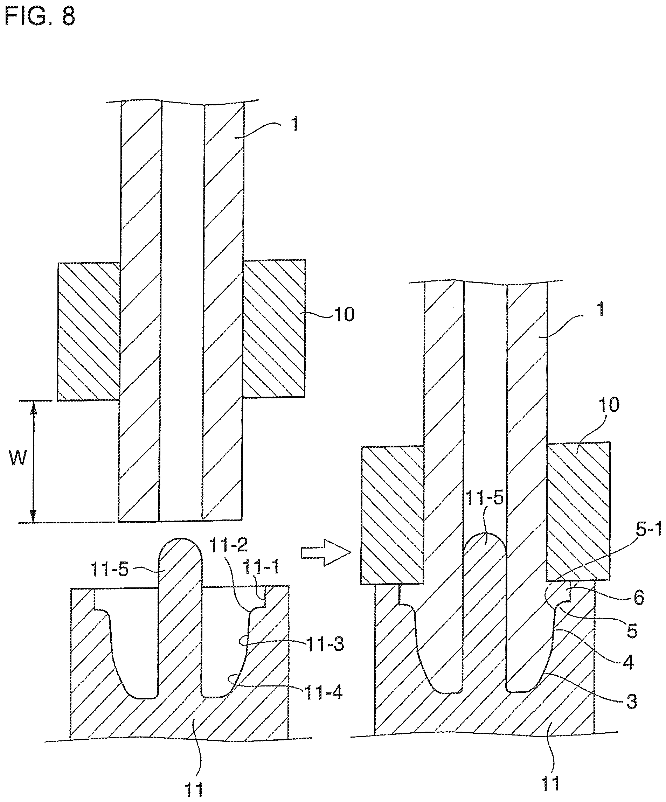

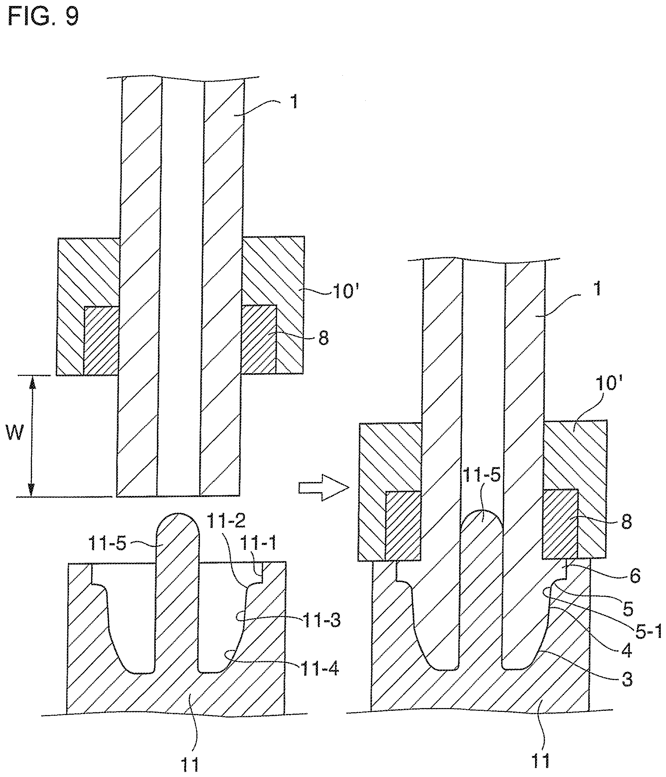

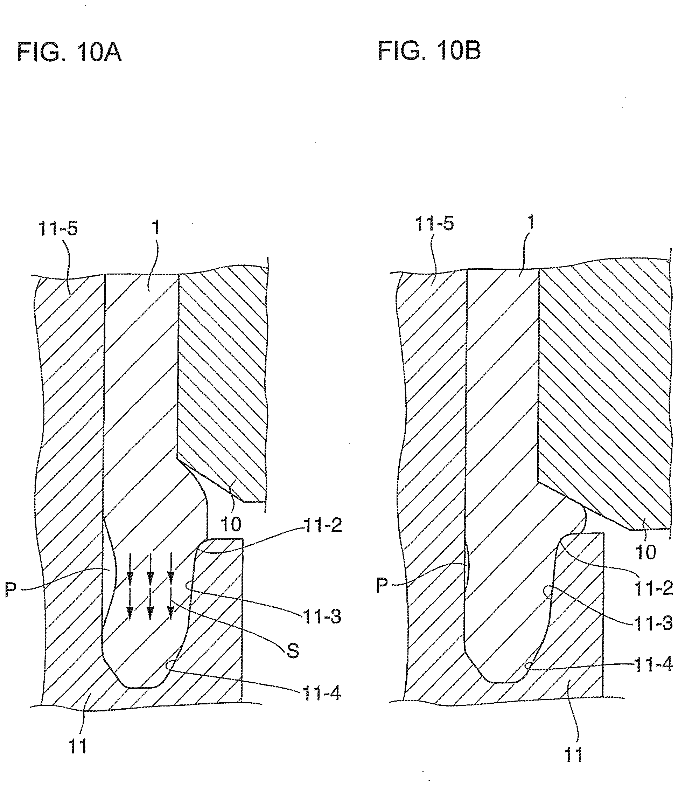

FIG. 1 is a vertical sectional side view showing a first embodiment of a high-pressure fuel injection pipe according to the present invention, FIG. 2 is a vertical sectional side view showing a second embodiment of the high-pressure fuel injection pipe according to the present invention, FIG. 3 is a vertical sectional side view showing a third embodiment of the high-pressure fuel injection pipe according to the present invention, FIG. 4 is a vertical sectional side view showing a fourth embodiment of the high-pressure fuel injection pipe according to the present invention, FIG. 5 is a vertical sectional side view showing a fifth embodiment of the high-pressure fuel injection pipe according to the present invention, FIG. 6 is a half vertical sectional side view of a truncated arcuate seat face showing a sixth embodiment of the high-pressure fuel injection pipe according to the present invention, FIG. 7 is an enlarged vertical sectional side view showing one embodiment of a punch member used for manufacturing a high-pressure fuel injection pipe according to the present invention, FIG. 8 is a working step diagram showing a first embodiment of a manufacturing method of a high-pressure fuel injection pipe using the punch member shown in FIG. 7, FIG. 9 is a working step diagram showing a second embodiment of the manufacturing method of a high-pressure fuel injection pipe using the punch member shown in FIG. 7, and FIG. 10 is partial sectional view of a connection head portion in a manufacturing method of a high-pressure fuel injection pipe using a punch member having substantially the same sectional structure as the punch member shown in FIG. 7, of which FIG. 10A is a partial sectional view showing a state of the connection head portion during formation thereof and FIG. 10B is a partial sectional view showing a state of the connection head portion at a completion time of the formation, where reference numeral 1 denotes a thick-walled and small-diametrical steel pipe, 2 denotes a connection head portion, 3 denotes a spherical seat face (pressing seat face), 4and 4' denote cylindrical faces whose contours in a section along an axial direction of the pipe have a predetermined opening angle θ on a rear side, 5 denotes a fillet portion, 6 denotes an annular flange portion, 7 denotes a mating part, 7a denotes a seat face (pressure-receiving seat face), 8 denotes a washer (sleeve washer), 9 denotes a stuffing nut, 10 and 10' denote chucks, and 11 denotes a punch member.

The thick-walled and small-diametrical steel pipe 1 is composed of a thick-walled steel pipe with a relatively small diameter having a pipe diameter of 6 mm to 10 mm and a wall thickness t of about 1.25 mm to 3.5 mm and being made of such a steel material as a stainless steel, a trip steel, a carbon steel for high-pressure piping, or an alloy steel which has been cut to a fixed size preliminarily.

A high-pressure fuel injection pipe according to a first embodiment shown in FIG. 1 has, at a connection end portion of a thick-walled and small-diametrical steel pipe 1, a connection head portion 2 including a truncated conical seat face 3 (pressing seat face) whose outer peripheral face corresponds to a mating seat face, an annular flange portion 6 provided so as to be spaced from the seat face 3 in an axial direction of the pipe, and a cylindrical face 4 continuing into the seat face 3 and formed such that its contours in a section along the axial direction of the pipe from an end portion 5-1 of a fillet portion 5 of the annular flange portion 6 on the side of an injection port of the pipe toward the seat face 3 is set such that a rear side opening angle θ in the section along the axial direction of the pipe satisfies 0° < θ ≤ 20°, and furthermore a condition that a ratio of the length h of the cylindrical face 4 in the axial direction of the pipe and the length H from a terminal of the connection head portion to an end portion of the fillet portion on the side of the annular flange portion of the cylindrical face 4 portion satisfies 0.33 ≤ h/H ≤ 0.85 is satisfied and along with this, only a pocket where formation strain which is a factor causing a wrinkle on an inner face thereof is small and whose volume is also small is present.

Incidentally, a washer 8 is closely or freely fitted on a part below a neck of the annular flange portion 6 by such means as caulking. An abutting face 8-1 on the washer 8 abutting on a stuffing nut 9 is formed in a flat face, a conical face, or a spherical face. Further, an abutting face of the annular flange portion 6 abutting on the washer 8 may be a flat face perpendicular to the axis of the pipe or a conical face whose diameter is reduced rearward.

High-pressure fuel injection pipes according to the second to fifth embodiments shown in FIG. 2 to FIG. 5 show ones of a washerless type and ones of a general washer type. Similar to the high-pressure fuel injection pipe shown in FIG. 1 regarding their structures, they each have, at a connection end portion of a thick-walled and small-diametrical steel pipe 1, a connection head portion 2 including a truncated conical seat face 3 (pressing seat face) whose outer peripheral face corresponds to a mating seat face, an annular flange portion 6 provided so as to be spaced from the seat face 3 in the axial direction of the pipe, and a cylindrical face 4 continuing into the seat face 3 and formed such that its contours in a section along the axial direction of the pipe from an end portion 5-1 of a fillet portion 5 of the annular flange portion 6 on the side of an injection port of the pipe toward the seat face 3 is set such that a rear side opening angle θ in the section along the axial direction of the pipe satisfies 0° < θ ≤ 20°, and furthermore a condition that a ratio of the length h of the cylindrical face 4 in the axial direction of the pipe and the length H from a terminal of the connection head portion to an end portion of the fillet portion on the side of the annular flange portion of the cylindrical face 4 portion satisfies 0.33 ≤ h/H ≤ 0.85 is satisfied.

Here, the high-pressure fuel injection pipe shown in FIG. 2 is a high-pressure fuel injection pipe having a washerless type of a connection head portion where a back face 6a of the annular flange portion 6 is formed in a conical face (a taper face) whose diameter is reduced in the axial direction of the pipe rearward; the high-pressure fuel injection pipe shown in FIG. 3 is a high-pressure fuel injection pipe having a washerless type of a connection head portion where a back face 6b of the annular flange portion 6 is formed in a spherical face (an arcuated face) whose diameter is reduced in the axial direction of the pipe rearward; the high-pressure fuel injection pipe shown in FIG. 4 is a general washer type of a high-pressure fuel injection pipe where an ordinary washer 8 is closely or freely fitted on a part below a neck of the annular flange portion 6 by means such as caulking; and the high-pressure fuel injection pipe shown in FIG. 5 is a high-pressure fuel injection pipe of a back-face spherical washer type using a washer 8 whose abutting face 8a abutting on a stuffing nut 9 is formed in a spherical face.

A high-pressure fuel injection pipe of a sixth embodiment shown in FIG. 6 is substantially similar to the high-pressure fuel injection pipes according to the first to fifth embodiments shown in FIG. 1 to FIG. 5 except that the contours of the cylindrical face 4 in a section along the axial direction of the pipe is formed so as to have a cylindrical face 4' presenting an arc shape projecting outwardly. Here, the reason why the contours of the cylindrical face 4' in a section along the axial direction of the pipe presents an arc shape slightly projecting outwardly is because the spring back phenomenon or the like occurs during formation of the connection head portion as described above.

In the high-pressure fuel injection pipes according to the first to sixth embodiments shown in FIG. 1 to FIG. 6 of the present invention, the connection head portion having the truncated conical or truncated arcuate seat face 3 whose outer peripheral face corresponds to a mating seat portion is buckled and formed by pressing externally an end portion of a thick-walled and small-diametrical steel pipe 1 having a relatively small diameter in the axial direction of the pipe by the punch member 11, as described above. In this regard, the punch member 11 of the present invention used for formation of the connection head portion has a structure which has a flat portion 11-1; an arcuate portion 11-2; an inner-diametrical portion 11-3 having contours in a section along the axial direction of the pipe satisfying the condition that the rear side opening angle θ in the section along the axial direction of the pipe satisfies 0° < θ ≤ 20° and 0.33 ≤ h/H ≤ 0.85; and a conical face or arcuate face 11-4 which correspond to the annular flange portion 6 of the connection head portion 2; the fillet portion 5 thereof; the cylindrical face 4 thereof having the contours satisfying the condition that the rear side opening angle θ in a sectional shape along the axial direction of the pipe satisfies 0° < θ ≤ 20° and 0.33 ≤ h/H ≤ 0.85; and the truncated conical or truncated arcuate seat face (pressing seat face) 3, respectively, and a cored bar portion 11-5, as shown as one embodiment in FIG. 7.

Next, a manufacturing method of a high-pressure fuel injection pipe according to the present invention using the above punch member 11 shown in FIG. 7 will be described with reference to FIG. 8 to FIG. 10.

The manufacturing method of a high-pressure fuel injection pipe shown in FIG. 8 comprises holding a chuck 10 on a thick-walled and small-diametrical steel pipe 1 which has been cut to have a specified product length and whose opening end portion has been subjected to a chamfering work while leaving a margin for working a head portion W in a state that the washer 8 (FIG. 9) has been separated from the chuck 10 and freely fitted on the steel pipe, and then pressing a distal end portion of the steel pipe put in this state in the axial direction of the pipe by the punch member 11. By this pressing, a portion of the margin for working a head portion W of the thick-walled and small-diametrical steel pipe 1 is plastically fluidized, so that, at the distal end portion of the steel pipe, the connection head portion 2 is composed of the truncated conical seat face (pressing seat face) 3 whose outer peripheral face corresponds to a mating seat portion, the annular flange portion 6 provided so as to be spaced from the seat face 3 in the axial direction of the pipe, and the cylindrical face 4 continuing the seat face 3 and formed such that its contours in a section along the axial direction of the pipe from an end portion 5-1 of the innermost peripheral fillet portion 5 of the annular flange portion 6 on the side of the injection port of the pipe toward the seat face 3 satisfies the condition that the rear side opening angle θ in the section along the axial direction of the pipe satisfies 0° < θ ≤ 20° and 0.33 ≤ h/H ≤ 0.85. In the case of this method, the washer 8 is moved to a part below a neck of the connection head portion 2 to be fitted thereon after press forming.

The manufacturing method of a high-pressure fuel injection pipe shown in FIG. 9 is a method which comprises preliminarily assembling the washer 8 to the thick-walled and small-diametrical steel pipe 1 on the side of the distal end of the steel pipe 1 while leaving a margin for working a head portion W of the connection head portion, and thereafter performing press forming in such a state that a portion of the steel pipe positioned near the end portion thereof has been held by a chuck 10' , where the washer 8 is assembled to the end portion of the thick-walled and small-diametrical steel pipe 1 which has been cut to have a specified product length and whose opening end portion has been subjected to a chamfering work while the margin for working a head portion W of the connection head portion is preliminarily left on the side of the distal end of the steel pipe 1, and the distal end portion of the steel pipe is then pressed in the axial direction of the pipe by punch member 11 in such a state that the steel pipe has been held by the chuck 10' . By this pressing, a portion of the margin for working a head portion W of the thick-walled and small-diametrical steel pipe 1 is plastically fluidized, so that, at the distal end portion of the steel pipe, the connection head portion 2 is composed of the truncated conical seat face (pressing seat face) 3 whose outer peripheral face corresponds to a mating seat portion, the annular flange portion 6 provided so as to be spaced from the seat face 3 in the axial direction of the pipe, and the cylindrical face 4 continuing the seat face 3 and formed such that its contours in a section along the axial direction of the pipe from an end portion 5-1 of the innermost peripheral fillet portion 5 of the annular flange portion 6 on the side of the injection port of the pipe toward the seat face 3 satisfies the condition that the rear side opening angle θ in the section along the axial direction of the pipe satisfies 0° < θ ≤ 20° and 0.33 ≤ h/H ≤ 0.85 .

That is, according to the manufacturing method of the present invention, by using the punch member 11 having the flat portion 11-1, the arcuate portion 11-2, the inner-diametrical portion 11-3 having the contours in a section along the axial direction of the pipe satisfying the condition that the rear side opening angle to the axis of the pipe in the section along the axial direction of the pipe satisfies 0° < θ ≤ 20° and 0.33 ≤ h/H ≤ 0.85, the conical face or arcuate face 11-4, and the cored bar portion, as the state of a connection head portion during formation thereof and at a completion time of formation thereof in a step for forming a connection head using a punch member having substantially the same sectional structure as the punch member shown in the above-described FIG. 7 are shown in FIG. 10, movement (arrows S) of an internal pipe material forced to be fluidized by movement of a pipe material flowed along a wall face of the inner-diametrical portion 11-3 having the contours of the punch member 11 in a section along the axial direction of the pipe satisfying the condition that the rear side opening angle θ in the section along the axial direction of the pipe satisfies 0° < θ ≤ 20° and 0.33 ≤ h/H ≤ 0.85 becomes larger according to increase in length of the inner-diametrical portion 11-3 (the cylindrical face 4) in the axial direction of the pipe during formation of the connection head portion as shown in FIG. 10A, so that it becomes possible to reduce expansions of a volume of the pocket portion P and formation strain which is a factor causing a wrinkle on the pocket portion as shown in FIG. 10B.

### Examples

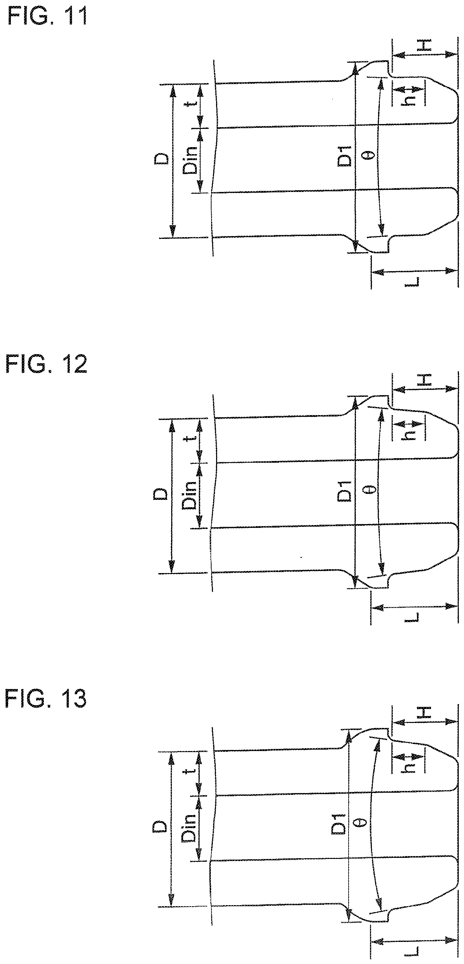

Examples according to the present invention are shown below. Examples 1 and 2 of Examples 1 to 4 respectively show examples using high-pressure fuel injection pipes shown in FIG. 11 and FIG. 12 (Example 3 is not shown), where the ratio (h/H) of the length h of the cylindrical face of the connection head portion in the axial direction of the pipe and the length H from the terminal of the connection head portion to the end portion of the cylindrical face on the side of the annular flange portion was constant (0.5), and the rear side opening angle θ of the contours of the cylindrical face in a section along the axial direction of the pipe was variously changed; and Example 4 shows a case of using the high-pressure fuel injection pipe where, like Examples 1 to 3, the ratio (h/H) of the length h of the cylindrical face of the connection head portion in the axial direction of the pipe and the length H from the terminal of the connection head portion to the end portion of the cylindrical face on the side of the annular flange portion was constant (0.5), and the rear side opening angle θ of the contours of the cylindrical face in a section along the axial direction of the pipe was changed. (FIG. 13)

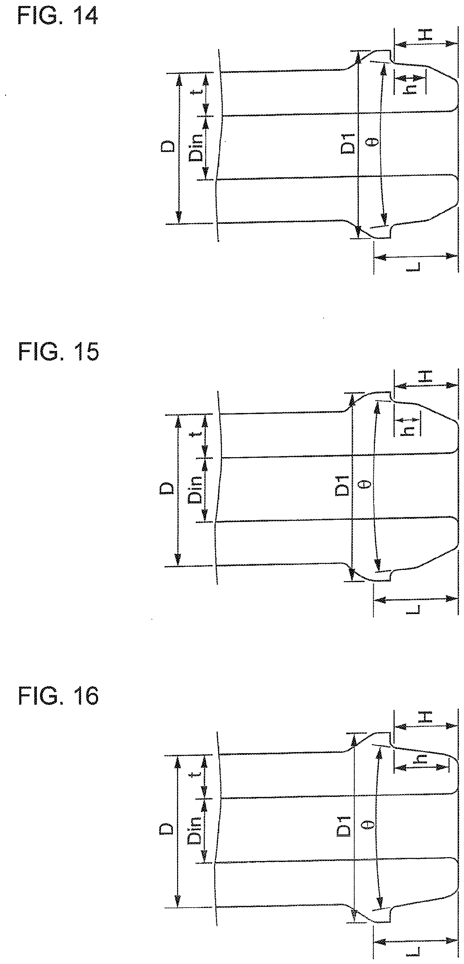

Further, Examples 5, 8, and 9 of Examples 5 to 9 are examples using high-pressure fuel injection pipes shown in FIG. 14 to FIG. 16, respectively, which show a case where the rear side opening angle θ of the contours of the cylindrical face in a section along the axial direction of the pipe was constant (15°), and the ratio (h/H) of the length h of the cylindrical face of the connection head portion in the axial direction of the pipe and the length H from the terminal of the connection head portion to the end portion of the fillet portion on the side of the annular flange portion of the cylindrical face in the axial direction of the pipe was variously changed; and Examples 6 and 7 show examples using high-pressure fuel injection pipes (not shown) where, like Examples 5, 8, and 9, the rear side opening angle θ of the contours of the cylindrical face in a section along the axial direction of the pipe was constant (15°), and the ratio (h/H) of the length h of the cylindrical face of the connection head portion in the axial direction of the pipe and the length H from the terminal of the connection head portion to the end portion of the fillet portion on the side of the annular flange portion of the cylindrical face in the axial direction of the pipe was variously changed.

On the other hand, Comparative Examples 1 to 3 show the cases where the ratio of the length h of the cylindrical face of the connection head portion in the axial direction of the pipe and the length H from the terminal of the connection head portion to the end portion of the cylindrical face on the side of the annular flange portion was constant (0.5), and the rear side opening angle θ of the contours of the cylindrical face in a section along the axial direction of the pipe deviated from the range of the present invention; and Comparative Examples 4 and 5 show the cases where the rear side opening angle θ of the contours of the cylindrical face in a section along the axial direction of the pipe was constant (15°), and the ratio (h/H) of the length h of the cylindrical face of the connection head portion in the axial direction of the pipe and the length H from the terminal of the connection head portion to the end portion of the fillet portion on the side of the annular flange portion of the cylindrical face in the axial direction of the pipe deviated from the range of the present invention.

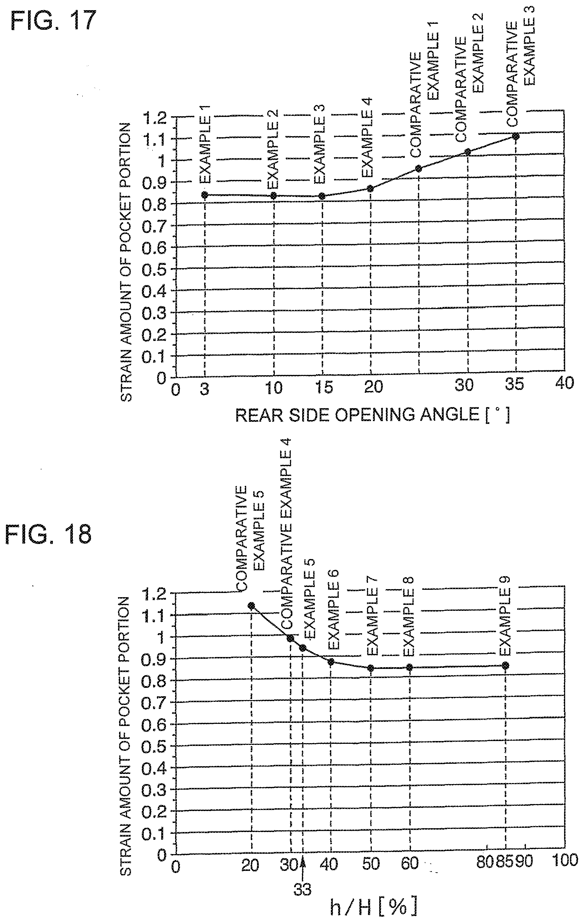

Additionally, the relationships between the rear side opening angle θ and a strain of the pocket portion and the relationships between the h/H and a strain of the pocket portion shown in the respective Examples and the respective Comparative Examples are shown in FIG. 17 and FIG. 18, respectively.

### Example 1

A high-pressure fuel injection pipe having a connection head portion shown in FIG. 11 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 by a forming method similar to the head portion forming method shown in FIG. 8.

Regarding the pipe diameter D and the wall thickness t of the thick-walled and small-diametrical steel pipe in this Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, the h/H were L = 5.3 mm, θ = 3°, h = 2 mm, H = 4 mm, and h/H = 0.5, respectively.

As a result of FEM analysis of a surface situation of a pocket portion (annular recessed portion) where a strain amount due to formation became maximum on an inner peripheral face of the connection head portion obtained in the high-pressure fuel injection pipe, the strain amount of the pocket (annular recessed portion) on the inner peripheral face of the connection head portion was an extremely small value as 0.85.

### Example 2

A high-pressure fuel injection pipe having a connection head portion shown in FIG. 12 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 by a forming method similar to the head portion forming method shown in FIG. 8.

Regarding the pipe diameter D and the wall thickness t of the thick-walled and small-diametrical steel pipe in this Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of the fillet portion on the side of the annular flange portion, and the h/H were L = 5.3 mm, θ = 10°, h = 2 mm, H = 4 mm, and h/H = 0.5, respectively.

In this Example, as a result of FEM analysis of a surface situation of a pocket portion (annular recessed portion) where a strain amount due to formation became maximum on an inner peripheral face of the connection head portion obtained in the high-pressure fuel injection pipe, the strain amount of the pocket portion was also an extremely small value as 0.84.

### Example 3

A high-pressure fuel injection pipe having a connection head portion (not shown) was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 by a forming method similar to the head portion forming method shown in FIG. 8.

Regarding the pipe diameter D and the wall thickness t of the thick-walled and small-diametrical steel pipe in this Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of the fillet portion on the side of the annular flange portion, and the h/H were L = 5.3 mm, θ = 15°, h = 2 mm, H = 4 mm, and h/H = 0.5, respectively.

In this Example, as a result of FEM analysis of a surface situation of a pocket portion (annular recessed portion) where a strain amount due to formation became maximum on an inner peripheral face of the connection head portion obtained in the high-pressure fuel injection pipe, the strain amount of the pocket portion was also an extremely small value as 0.83.

### Example 4

A high-pressure fuel injection pipe having a connection head portion shown in FIG. 13 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 by a forming method similar to the head portion forming method shown in FIG. 8.

Regarding the pipe diameter D and the wall thickness t of the thick-walled and small-diametrical steel pipe in this Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal portion to an end portion of a fillet portion on the side of the annular flange portion, and the h/H were L = 5.3 mm, θ = 20°, h = 2 mm, H = 4 mm, and h/H = 0.5, respectively.

In this Example, as a result of FEM analysis of a surface situation of a pocket portion (annular recessed portion) where a strain amount due to formation became maximum on an inner peripheral face of the connection head portion obtained in the high-pressure fuel injection pipe, the strain amount of the pocket portion was also an extremely small value as 0.86.

### [Comparative Example 1]

A high-pressure fuel injection pipe having a connection head portion which was approximately similar to that of Example 1 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 except for the rear side opening angle θ of the inner-diametrical portion 11-3 by a forming method similar to the head portion forming method shown in FIG. 8.

Regarding the pipe diameter D and the wall thickness t of the thick-walled and small-diametrical steel pipe in this Comparative Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, and the h/H were L = 5.3 mm, θ = 25°, h = 2 mm, H = 4 mm, and h/H = 0.5, respectively.

As a result of FEM analysis of a surface situation of a pocket portion (annular recessed portion) where a strain amount due to formation became maximum on an inner peripheral face of the connection head portion of the high-pressure fuel injection pipe in this Comparative Example, the strain amount of the pocket (annular recessed portion) on the inner peripheral face of the connection head portion indicated a relatively high value as 0.95.

### [Comparative Example 2]

A high-pressure fuel injection pipe having a connection head portion which was approximately similar to that of Example 2 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 except for the rear side opening angle θ of the inner-diametrical portion 11-3 by a forming method similar to the head portion forming method shown in FIG. 8.

Regarding the pipe diameter D and the wall thickness t of the thick-walled and small-diametrical steel pipe in this Comparative Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, and the h/H were L = 5.3 mm, θ = 30°, h = 2 mm, H = 4 mm, and h/H = 0.5, respectively.

In this Comparative Example, as a result of FEM analysis of a surface situation of a pocket portion (annular recessed portion) where a strain amount due to formation became maximum on an inner peripheral face of the connection head portion obtained in the high-pressure fuel injection pipe, the strain amount of the pocket portion indicated a higher value than that of Comparative Example 1 as 1.02.

### [Comparative Example 3]

A high-pressure fuel injection pipe having a connection head portion which was approximately similar to that of Example 2 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 except for the rear side opening angle θ of the inner-diametrical portion 11-3 by a forming method similar to the head portion forming method shown in FIG. 8.

Regarding the pipe diameter D and the wall thickness t of the thick-walled and small-diametrical steel pipe in this Comparative Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, the h/H were L = 5.3 mm, θ = 35°, h = 2 mm, H = 4 mm, and h/H = 0.5, respectively.

In this Comparative Example, as a result of FEM analysis of a surface situation of a pocket portion (annular recessed portion) where a strain amount due to formation became maximum on an inner peripheral face of the connection head portion obtained in the high-pressure fuel injection pipe, the strain amount of the pocket portion indicated a further higher value than that of Comparative Example 2 as 1.1.

### Example 5

A high-pressure fuel injection pipe having a connection head portion shown in FIG. 14 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 except for the lengths of the inner-diametrical portion 11-3 and the conical face or the arcuate face 11-4 in the axial direction of the pipe by a forming method similar to the head portion forming method shown in FIG. 8.

Regarding the pipe diameter D and the wall thickness t of the thick-walled and small-diametrical steel pipe in this Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, and the h/H were L = 5.3 mm, θ = 15°, h = 1.33 mm, H = 4 mm, and h/H = 0.33, respectively.

As a result of FEM analysis of a situation of a pocket (annular recessed portion) on the inner peripheral face of the connection head portion of the high-pressure fuel injection pipe in this Example, the strain amount of the pocket (annular recessed portion) on the inner peripheral face of the connection head portion was a small value as 0.93 in this Example.

### Example 6

A high-pressure fuel injection pipe having a connection head portion (not shown) was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 except for the lengths of the inner-diametrical portion 11-3 and the conical face or the arcuate face 11-4 in the axial direction of the pipe by a forming method similar to the head portion forming method shown in FIG. 8.

Regarding the pipe diameter D and the wall thickness t of the thick-walled and small-diametrical steel pipe in this Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, and the h/H were L = 5.3 mm, θ = 15°, h = 1.6 mm, H = 4 mm, and h/H = 0.4, respectively.

As a result of FEM analysis of a surface situation of a pocket portion (annular recessed portion) where a strain amount due to formation became maximum on an inner peripheral face of the connection head portion of the high-pressure fuel injection pipe in this Example, the strain amount of the pocket (annular recessed portion) on the inner peripheral face of the connection head portion was also an extremely small value as 0.86 in this Example.

### Example 7

A high-pressure fuel injection pipe having a connection head portion (not shown) was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 except for the lengths of the inner-diametrical portion 11-3 and the conical face or the arcuate face 11-4 in the axial direction of the pipe by a forming method similar to the head portion forming method shown in FIG. 8 .

Regarding the pipe diameter D and the wall thickness t of the thick-walled and small-diametrical steel pipe in this Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, and the h/H were L = 5.3 mm, θ = 15°, h = 2.0 mm, H = 4.0 mm, and h/H = 0.5, respectively.

In this Example, as a result of FEM analysis of a surface situation of a pocket portion (annular recessed portion) where a strain amount due to formation became maximum on an inner peripheral face of the connection head portion obtained in the high-pressure fuel injection pipe, the strain amount of the pocket portion was also an extremely small value as 0.84.

### Example 8

A high-pressure fuel injection pipe having a connection head portion shown in FIG. 15 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 except for the lengths of the inner-diametrical portion 11-3 and the conical face or the arcuate face 11-4 in the axial direction of the pipe by a forming method similar to the head portion forming method shown in FIG. 8.

Regarding the pipe diameter D and the wall thickness t of the thick-walled and small-diametrical steel pipe in this Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, and the h/H were L = 5.3 mm, θ = 15°, h = 2.4 mm, H = 4.0 mm, and h/H = 0.60, respectively.

In this Example, as a result of FEM analysis of a surface situation of a pocket portion (annular recessed portion) where a strain amount due to formation became maximum on an inner peripheral face of the connection head portion obtained in the high-pressure fuel injection pipe, the strain amount of the pocket portion was also an extremely small value as 0.833.

### Example 9

A high-pressure fuel injection pipe having a connection head portion shown in FIG. 16 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 except for the lengths of the inner-diametrical portion 11-3 and the conical face or the arcuate face 11-4 in the axial direction of the pipe by a forming method similar to the head portion forming method shown in FIG. 8.

Regarding the pipe diameter D and the wall thickness t of the thick-walled and small-diametrical steel pipe in this Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, and the h/H were L = 5.3 mm, θ = 15°, h = 3.4 mm, H = 4.0 mm, and h/H = 0.85, respectively.

In this Example, as a result of FEM analysis of a surface situation of a pocket portion (annular recessed portion) where a strain amount due to formation became maximum on an inner peripheral face of the connection head portion obtained in the high-pressure fuel injection pipe, the strain amount of the pocket portion was also an extremely small value as 0.83.

### [Comparative Example 4]

A high-pressure fuel injection pipe having a connection head portion (not shown) which was approximately similar to that of Example 2 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 except for the lengths of the inner-diametrical portion 11-3 and the conical face or the arcuate face 11-4 in the axial direction of the pipe by a forming method similar to the head portion forming method shown in FIG. 8.

Regarding the pipe diameter D and the wall thickness t of the thick-walled and small-diametrical steel pipe in this Comparative Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, and the h/H were L = 5.3 mm, θ = 15°, h = 1.2 mm, H = 4 mm, and h/H = 0.30, respectively.

As a result of FEM analysis of a surface situation of a pocket portion (annular recessed portion) where a strain amount due to formation became maximum on an inner peripheral face of the connection head portion of the high-pressure fuel injection pipe in this Comparative Example, the strain amount of the pocket (annular recessed portion) on the inner peripheral face of the connection head portion indicated a high value as 0.98.

### [Comparative Example 5]

A high-pressure fuel injection pipe having a connection head portion (not shown) which was approximately similar to that of Example 1 was manufactured using a thick-walled and small-diametrical steel pipe (t/D = 0.27) (material: DIN equivalent to ST52) having a pipe diameter D of 9.0 mm, a pipe inner diameter Din of 4.0 mm, and a wall thickness t of 2.5 mm and furthermore using a punch member approximately similar to the punch member shown in FIG. 7 except for the lengths of the inner-diametrical portion 11-3 and the conical face or the arcuate face 11-4 in the axial direction of the pipe by a forming method similar to the head portion forming method shown in FIG. 8.

Regarding the pipe diameter D and the wall thickness t of the thick-walled and small-diametrical steel pipe in this Comparative Example, the distance L from a connection head portion terminal of the connection head portion obtained to a back face of the annular flange portion in the axial direction of the pipe, the rear side opening angle θ of the cylindrical face, the length h of the cylindrical face in the axial direction of the pipe, the length H from the connection head portion terminal to an end portion of a fillet portion on the side of the annular flange portion, and the h/H were L = 5.3 mm, θ = 15°, h = 0.8 mm, H = 4 mm, and h/H = 0.20, respectively.

In this Comparative Example, as a result of FEM analysis of a surface situation of a pocket portion (annular recessed portion) where a strain amount due to formation became maximum on an inner peripheral face of the connection head portion obtained in the high-pressure fuel injection pipe, the strain amount of the pocket portion (annular recessed portion) indicated an extremely high value as 1.14.

### Industrial Applicability

In the high-pressure fuel injection pipe according to the present invention, by forming the cylindrical face having a contours from the end portion of the innermost peripheral fillet portion of the annular flange portion on the side of the injection port of the pipe toward the seat face such that the rear side opening angle θ in the section along the axial direction of the pipe falls in a range of 0 to 20° and setting the ratio of the length h of the cylindrical face in the axial direction of the pipe and the length H from the terminal of the connection head portion to the end portion of the cylindrical face on the side of the annular flange portion to satisfy 0.33 ≤ h/H ≤ 0.85, a connection head portion, in which supersizing of a pocket (annular recessed portion) generated inside the connection head portion by plastic working can be suppressed and generation of a formation wrinkle can be suppressed, can be obtained. Thereby, risks of generation of a crack in a valley portion of the pocket portion during formation of the connection head portion and generation of a crack due to cavitation erosion caused by fluid pressure within the connection head portion, as well as enlargement of the inner diameter associated with formation of the pocket and a rising phenomenon of tensile stress on the inner surface due to stress concentration during the formation of the connection head portion are eliminated, and furthermore such a possibility that the inner peripheral face of the connection head portion acts as a starting point of fatigue failure can be reduced largely.

Further, according to the manufacturing method of a high-pressure fuel injection pipe having a connection head portion according to the present invention, a high-pressure fuel injection pipe with high quality can be manufactured where movement of a pipe-internal material forced to be fluidized according to movement of a pipe material flowing along the cylindrical face in the inner-diametrical portion of the punch during formation becomes larger according to increase of the length of the cylindrical face in the axial direction of the pipe, and expansions of the volume of the pocket portion and the formation strain can be reduced, so that a risk of generation of a crack due to cavitation erosion caused by fluid pressure on an inner periphery of the connection head portion and enlargement of the inner diameter associated with formation of the pocket and a rising phenomenon of tensile stress on the inner surface due to stress concentration during the formation of the connection head portion are eliminated, and furthermore such a possibility that the inner peripheral face of the connection head portion acts as a starting point of fatigue failure can be reduced largely.

Accordingly, the present invention can be applied to not only a high-pressure fuel injection pipe arranged and frequently used as a supply passage of fuel in a diesel internal combustion engine but also various high-pressure metal pipes having a connection head portion obtained from a thick-walled steel pipe having a relatively small diameter, and it is considerably high in industrial utility value.

### Explanation of Reference Numerals

1: thick-walled and small-diametrical steel pipe
2: connection head portion
3: spherical seat face (pressing seat face)
4, 4': cylindrical face
5: fillet portion
6: annular flange portion
7: mating part
7a: seat face (pressure-receiving seat face)
8: washer (sleeve washer)
9: stuffing nut
10, 10': chuck
11: punch member

## Claims

1. A high-pressure fuel injection pipe having a connection head portion (2) which comprises, in a connection end portion of a thick-walled steel pipe (1) having a relatively small diameter, a truncated conical or truncated arcuate seat face (3), an annular flange portion (6) formed to be spaced from the seat face (3) in an axial direction of the pipe, and a cylindrical face (4) continuing into the seat face (3) and formed between the seat face (3) and a fillet portion (5) of the annular flange portion (6), wherein
- the connection head portion (2) is configured such that the cylindrical face (4) has contours, in a section along the axial direction of the pipe from an end portion of the fillet portion (5) of the annular flange portion (6) toward the seat face (3), formed such that a rear side opening angle θ in the section along the axial direction of the pipe satisfies 0° < θ ≤ 20° and furthermore, when the length of the cylindrical face (4) in the axial direction of the pipe is represented by h and the length of the pipe in the axial direction of the pipe from a terminal of the connection head portion (2) to an end portion of the fillet portion (5) on the side of the annular flange portion (6) of the cylindrical face (4) is represented by H, a ratio of the h and H satisfies 0.33 ≤ h/H ≤ 0.85, and **characterised in that** the contours of the cylindrical face (4) in a section along the axial direction of the pipe are of a straight line shape.

2. The high-pressure fuel injection pipe according to claim 1, wherein the seat face (3) is formed in a spherical shape.

3. A manufacturing method of a high-pressure fuel injection pipe having a connection head portion (2) which comprises a truncated conical or truncated arcuate seat face (3), an annular flange portion (6) formed to be spaced from the seat face (3) in an axial direction of the pipe, and a cylindrical face (4) continuing into the seat face (3) and formed between the seat face (3) and a fillet portion (5) of the annular flange portion (6), the connection head portion (2) being buckled and formed by pressing externally an end portion of a thick-walled steel pipe (1) having a relatively small diameter in the axial direction of the pipe by using a punch member (11), wherein
- the punch member (11) having an inner-diametrical portion having contours, in a section along the axial direction of the pipe from an end portion of the fillet portion (5) of the annular flange portion (6) toward the seat face (3), formed such that a rear side opening angle θ in the section along the axial direction of the pipe satisfies 0° < θ ≤ 20°, and furthermore, when the length of the inner-diametrical portion in the axial direction of the pipe is represented by h and the length in the axial direction of the pipe from a terminal of the connection head portion (2) to an end portion of the fillet portion (5) on the side of the annular flange portion (6) of the inner-diametrical portion is represented by H, a ratio of the h and H satisfies 0.33 ≤ h/H ≤ 0.85, and **characterised in that**
- the contours of the cylindrical face (4) in a section along the axial direction of the pipe are of a straight line shape.

4. The manufacturing method of a high-pressure fuel injection pipe according to claim 3, wherein the seat face (3) is formed in a spherical shape.

## Patentansprüche

1. Hochdruck-Kraftstoffeinspritzrohr mit einem Verbindungskopfabschnitt (2), welcher, in einem Verbindungsendabschnitt eines dickwandigen Stahlrohrs (1) mit einem relativ kleinen Durchmesser, eine trunkierte konische oder trunkierte bogenförmige Dichtfläche (3), einen ringförmigen Flanschabschnitt (6), der gebildet ist, um von der Dichtfläche (3) in einer axialen Richtung des Rohrs beabstandet zu sein, und eine zylindrische Fläche (4), die sich in die Dichtfläche (3) fortsetzt und zwischen der Dichtfläche (3) und einem Ausrundungsabschnitt (5) des ringförmigen Flanschabschnitts (6) gebildet ist, umfasst, wobei
- der Verbindungskopfabschnitt (2) derart konfiguriert ist, dass die zylindrische Fläche (4), in einem Bereich entlang der axialen Richtung des Rohrs von einem Endabschnitt des Ausrundungsabschnitts (5) des ringförmigen Flanschabschnitts (6) hin zur Dichtfläche (3), Konturen aufweist, die derart gebildet sind, dass ein Rückseitenöffnungswinkel θ in dem Bereich entlang der axialen Richtung des Rohrs 0° < θ ≤ 20° genügt und außerdem, wenn die Länge der zylindrischen Fläche (4) in der axialen Richtung des Rohrs durch h repräsentiert wird und die Länge des Rohrs in der axialen Richtung des Rohrs ab einem terminalen Ende des Verbindungskopfabschnitt (2) zu einem Endabschnitt des Ausrundungsabschnitts (5) auf der Seite des ringförmigen Flanschabschnitts (6) der zylindrischen Fläche (4) durch H repräsentiert wird, ein Verhältnis der h und H 0,33 ≤ h/H ≤ 0,85 genügt, und **dadurch gekennzeichnet, dass**
die Konturen der zylindrischen Fläche (4) in einem Bereich entlang der axialen Richtung des Rohrs von einer geradlinigen Form sind.

2. Hochdruck-Kraftstoffeinspritzrohr nach Anspruch 1, wobei die Dichtfläche (3) in einer kugelförmigen Form gebildet ist.

3. Herstellungsverfahren eines Hochdruck-Kraftstoffeinspritzrohrs mit einem Verbindungskopfabschnitt (2), welcher eine trunkierte konische oder trunkierte bogenförmige Dichtfläche (3), einen ringförmigen Flanschabschnitt (6), der gebildet ist, um von der Dichtfläche (3) in einer axialen Richtung des Rohrs beabstandet zu sein, und eine zylindrische Fläche (4), die sich in die Dichtfläche (3) fortsetzt und zwischen der Dichtfläche (3) und einem Ausrundungsabschnitt (5) des ringförmigen Flanschabschnitts (6) gebildet ist, umfasst, wobei der Verbindungskopfabschnitt (2) gestaucht wird und gebildet wird durch externes Pressen eines Endabschnitts eines dickwandigen Stahlrohrs (1) mit einem relativ kleinen Durchmesser in der axialen Richtung des Rohrs, durch Verwenden eines Stanzelements (11), wobei
- das Stanzelement (11) einen Innendurchmesserabschnitt aufweist, der in einem Bereich entlang der axialen Richtung des Rohrs von einem Endabschnitt des Ausrundungsabschnitts (5) des ringförmigen Flanschabschnitts (6) hin zur Dichtfläche (3), Konturen aufweist, die derart gebildet sind, dass ein Rückseitenöffnungswinkel θ in dem Bereich entlang der axialen Richtung des Rohrs 0° < θ ≤ 20° genügt und außerdem, wenn die Länge des Innendurchmesserabschnitts in der axialen Richtung des Rohrs durch h repräsentiert wird und die Länge in der axialen Richtung des Rohrs ab einem terminalen Ende des Verbindungskopfabschnitt (2) zu einem Endabschnitt des Ausrundungsabschnitts (5) auf der Seite des ringförmigen Flanschabschnitts (6) des Innendurchmesserabschnitts durch H repräsentiert wird, ein Verhältnis der h und H 0,33 ≤ h/H ≤ 0,85 genügt, und **dadurch gekennzeichnet, dass**
- die Konturen der zylindrischen Fläche (4) in einem Bereich entlang der axialen Richtung des Rohrs von einer geradlinigen Form sind.

4. Herstellungsverfahren eines Hochdruck-Kraftstoffeinspritzrohrs nach Anspruch 3, wobei die Dichtfläche (3) in einer kugelförmigen Form gebildet ist.

## Revendications

1. Tubulure d'injection de carburant à haute pression ayant une portion de tête de raccordement (2) qui comprend, dans une portion d'extrémité de raccordement d'une tubulure en acier à paroi épaisse (1) ayant un diamètre relativement petit, une face de siège (3) conique tronquée ou arquée tronquée, une portion de bride annulaire (6) formée pour être espacée de la face de siège (3) dans une direction axiale de la tubulure, et une face cylindrique (4) se poursuivant dans la face de siège (3) et formée entre la face de siège (3) et une portion d'arrondi (5) de la portion de bride annulaire (6), dans laquelle
- la portion de tête de raccordement (2) est configurée de sorte que la face cylindrique (4) ait des contours, dans une section le long de la direction axiale de la tubulure d'une portion d'extrémité de la portion d'arrondi (5) de la portion de bride annulaire (6) vers la face de siège (3), formés de sorte qu'un angle d'ouverture côté arrière θ dans la section le long de la direction axiale de la tubulure satisfasse à 0° < θ ≤ 20° et de plus, lorsque la longueur de la face cylindrique (4) dans la direction axiale de la tubulure est représentée par h et que la longueur de la tubulure dans la direction axiale de la tubulure d'un bout de la portion de tête de raccordement (2) à une portion d'extrémité de la portion d'arrondi (5) sur le côté de la portion de bride annulaire (6) de la face cylindrique (4) est représentée par H, un rapport entre h et H satisfait à 0,33 ≤ h/H ≤ 0,85, et
**caractérisée en ce que**
les contours de la face cylindrique (4) dans une section le long de la direction axiale de la tubulure sont en forme de ligne droite.

2. Tubulure d'injection de carburant à haute pression selon la revendication 1, dans laquelle la face de siège (3) est en forme de sphère.

3. Procédé de fabrication d'une tubulure d'injection de carburant à haute pression ayant une portion de tête de raccordement (2) qui comprend une face de siège (3) conique tronquée ou arquée tronquée, une portion de bride annulaire (6) formée pour être espacée de la face de siège (3) dans une direction axiale de la tubulure, et une face cylindrique (4) se poursuivant dans la face de siège (3) est formée entre la face de siège (3) et une portion d'arrondi (5) de la portion de bride annulaire (6), la portion de tête de raccordement (2) étant déformée et formée par pression externe d'une portion d'extrémité d'une tubulure en acier à paroi épaisse (1) ayant un diamètre relativement petit dans la direction axiale de la tubulure en utilisant un élément de poinçonnage (11), dans lequel
- l'élément de poinçonnage (11) ayant une portion diamétrale intérieure ayant des contours, dans une section le long de la direction axiale de la tubulure d'une portion d'extrémité de la portion d'arrondi (5) de la portion de bride annulaire (6) vers la face de siège (3), formés de sorte qu'un angle d'ouverture côté arrière θ dans la section le long de la direction axiale de la tubulure satisfasse à 0° < θ ≤ 20° et de plus, lorsque la longueur de la portion diamétrale intérieure dans la direction axiale de la tubulure est représentée par h et que la longueur dans la direction axiale de la tubulure d'un bout de la portion de tête de raccordement (2) à une portion d'extrémité de la portion d'arrondi (5) sur le côté de la portion de bride annulaire (6) de la portion diamétrale intérieure est représentée par H, un rapport entre h et H satisfait à 0,33 ≤ h/H ≤ 0,85, et
**caractérisé en ce que**
- les contours de la face cylindrique (4) dans une section le long de la direction axiale de la tubulure sont en forme de ligne droite.

4. Procédé de fabrication d'une tubulure d'injection de carburant à haute pression selon la revendication 3, dans lequel la face de siège (3) est en forme de sphère.
